Europäisches Patentamt

European Patent Office

Office européen des brevets

(11) Publication number: **0 237 491**
A2

(12) **EUROPEAN PATENT APPLICATION**

(21) Application number: 87830001.1

(22) Date of filing: 07.01.87

(51) Int. Cl.³: **G 03 B 17/17**

(30) Priority: 08.01.86 IT 930486

(43) Date of publication of application:
16.09.87 Bulletin 87/38

(84) Designated Contracting States:
AT BE CH DE ES FR GB GR LI LU NL SE

(71) Applicant: Gori, Marcella
Loc. Fontaccia 11/A
I-58052 Montiano Grosseto(IT)

(72) Inventor: Morabito, Antonio
Via Palazzo dei Diavoli, 101
I-50142 Firenze(IT)

(72) Inventor: Gori, Marcella
Loc. Fontaccia, 11/A
I-58052 Montiano Grosseto(IT)

(74) Representative: Mannucci, Gianfranco, Dott.-Ing.
Ufficio Tecnico Ing. A. Mannucci Via della Scala 4
I-50123 Firenze(IT)

(54) Microcamera with reflection systems of reduced overall dimensions.

(57) In the microcamera, each of the two reflection systems comprises: a first-mirror (7) transversally located in respect to the advancement direction and which projects in a direction parallel to the subject plane; a second inclined mirror (9) which projects laterally and parallel to the subject plane; and further side mirrors (12, ... 28), the last of which receives the images of the two reflection systems and is combined with the microfilming and projecting system (16).

Fig.5

EP 0 237 491 A2

The invention refers to microcameras for banks, banking-houses and others, which is realized so as to have reduced dimensions in respect to the cameras of known types, with obvious advantages as far as their use is concerned. These and other objects will be apparent to those skilled in the art, from the reading of the following description.

The present microcamera comprises a track for guiding the document which is to be microfilmed on the two faces at longitudinally offset positions while simultaneously keeping both the document and the film in motion, two systems for reflecting the images of the two faces, and an optical system which picks up the two images from a mirror shared by the two systems, to project the same images side-by-side onto the film to be exposed. According to the invention, each reflection system includes: a first mirror transversally located in respect to the advancement direction and which projects in a direction parallel to the subject plane; a second inclined mirror which projects laterally and in a direction parallel to the subject plane; and further side mirrors, the last of which receives the images of the two reflection systems and is combined with the optical system.

0237491

The optical system for the projection onto the film has its axis horizontally disposed and parallel to the advancement direction of the document, and the film is made to advance vertically.

The invention will be better understood by following the description and the attached drawing, which shows a practical non - limitative exemplification of the invention itself. In the drawing:

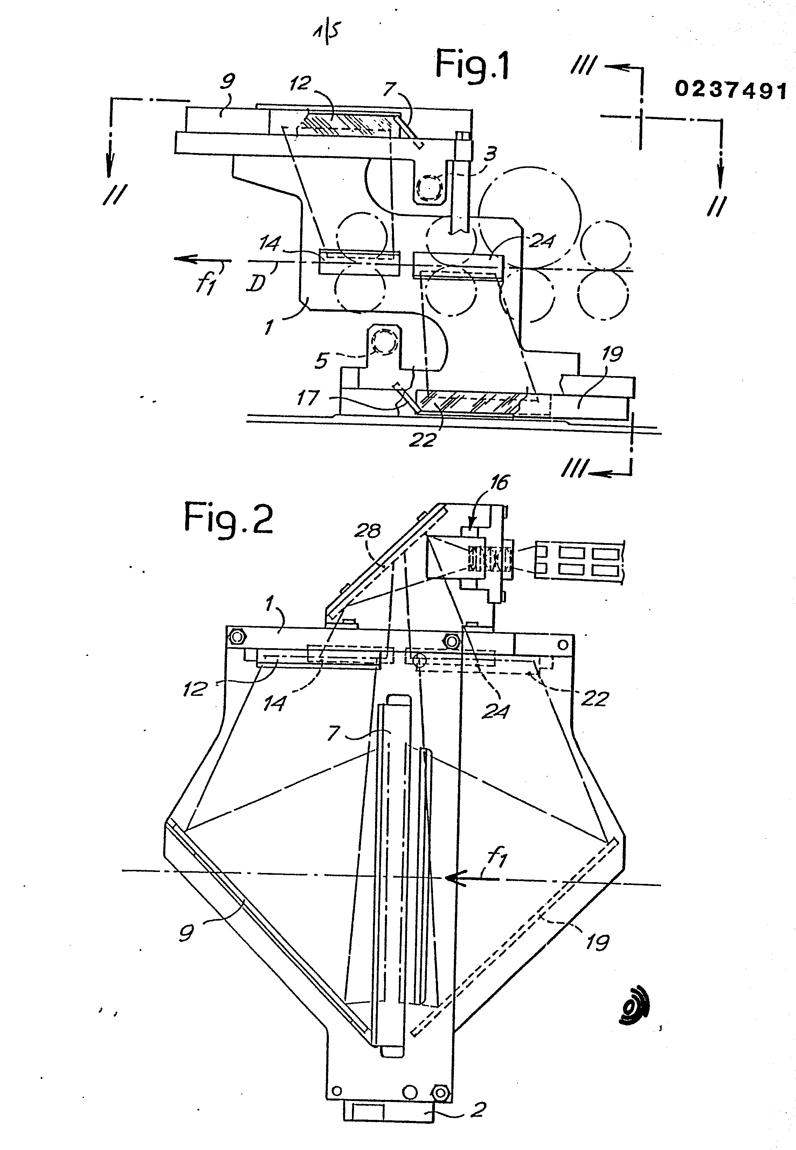

Fig. 1 shows a schematic side view of the inner members of the camera;

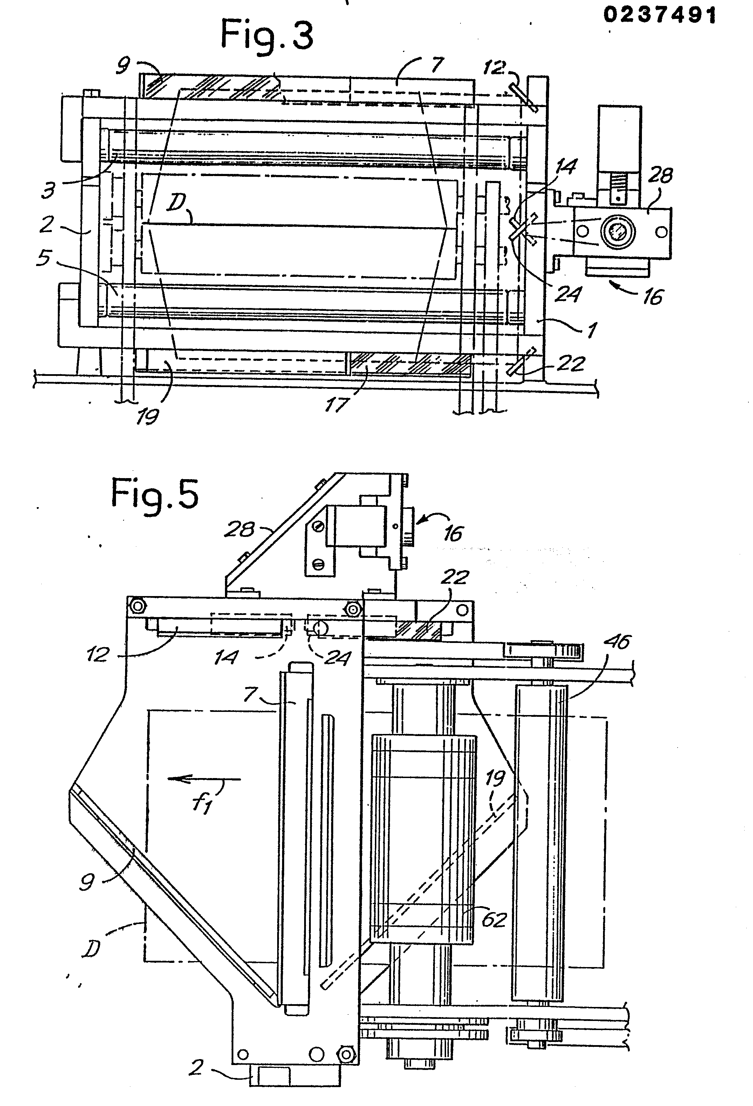

Figs. 2 and 3 show two schematic views on lines II-II and III-III of Fig. 1;

Figs. 4, 5 and 6 are similar to Figs. 1, 2 and 3, but show, prevalently, the kinematic dispositions for the advancement and the stamping of the documents;

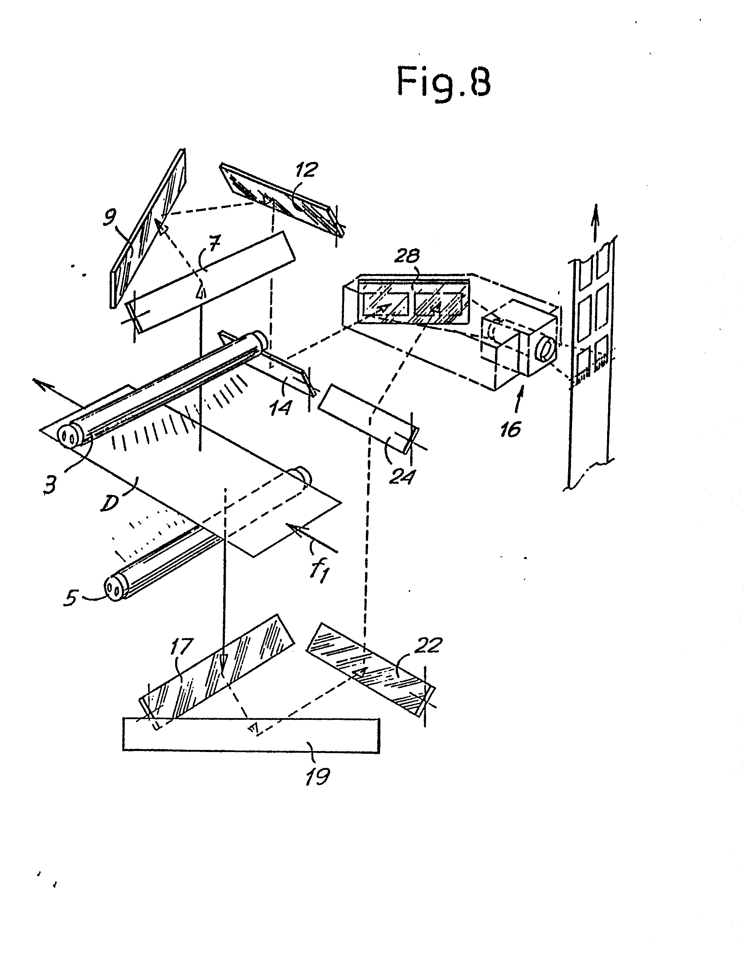

Figs. 7 and 8 show an optical scheme and a perspective scheme of the reflection systems and of the final optical system.

The camera structure generally comprises two side panels 1, 2 that are sufficiently spaced apart to ensure the maximum transverse dimension necessary for the transfer of the documents to be microfilmed. The advancement direction of the documents D horizontally lying is indicated by the arrow f1 in the

various figures. A tubular lamp 3 is disposed above the lying and advancement plane of the document and transversally to the advancement direction, and a tubular lamp 5 is disposed below the plane where the document is laid and advances and in offset relationship to the lamp 3, so as to have two different zones of upper and lower lighting, respectively. Accordingly, the images result slightly staggered and the upper and lower lightings do not disturb each other as far as the formation of the images is concerned. In combination with the upper lamp 3, an inclined transverse mirror 7 is provided disposed at an angle of 45° so that it can project the image portion instantaneously present at the lighting point, according to a beam which is practically parallel to the document lying plane; this beam is intercepted by a second mirror 9 which is disposed at an inclination of 45° in respect to the advancement direction of the document, but perpendicular to said lying plane, in order to project the image beam again parallel to the lying plane of the document and towards a mirror 12 which lies laterally to the transfer zone of the document. This mirror is downwardly inclined 45°, being longitudinally disposed, that is, parallel to the advancement direction indicated by the arrow f1;

therefore the image is now projected downwards onto a side of the document transfer zone. The image is picked up by a further mirror 14, which is disposed at an intermediate position and inclined again 45° but towards the outside and again more or less transversely, so as to deliver the image to a projection and microfilming unit generally indicated by 16. Similarly to the projection system of mirrors 7, 9, 12, 14, a system of mirrors 17, 19, 22, 24 is provided - in combination with the lower lamp 5 and for the projection of the images of the lower face of the document - which system has the same function as the upper mirror system. The two images reflected by mirrors 14 and 24 are projected onto a common mirror 28 which reflects both the images to the projection and microfilming system 16. There is very little difference between the mirrors of the two reflection systems , as far as their inclination is concerned, in order to ensure that the images of the two faces on the film will come to correspond to each other upon their side-by-side arrangement for the film exposure, in spite of the fact that these images are in offset relationship in the survey as indicated above with regard to the lighting of lamps 3 and 5.

By the above disposition, the height dimension of the apparatus is greatly limited in comparison with those of currently adopted systems having substantially symmetrical dispositions of the mirrors, and this limitation of the height, and thus of the overall dimensions, is particularly important for apparatuses which are to be placed on a work bench as in banks, banking houses or other.

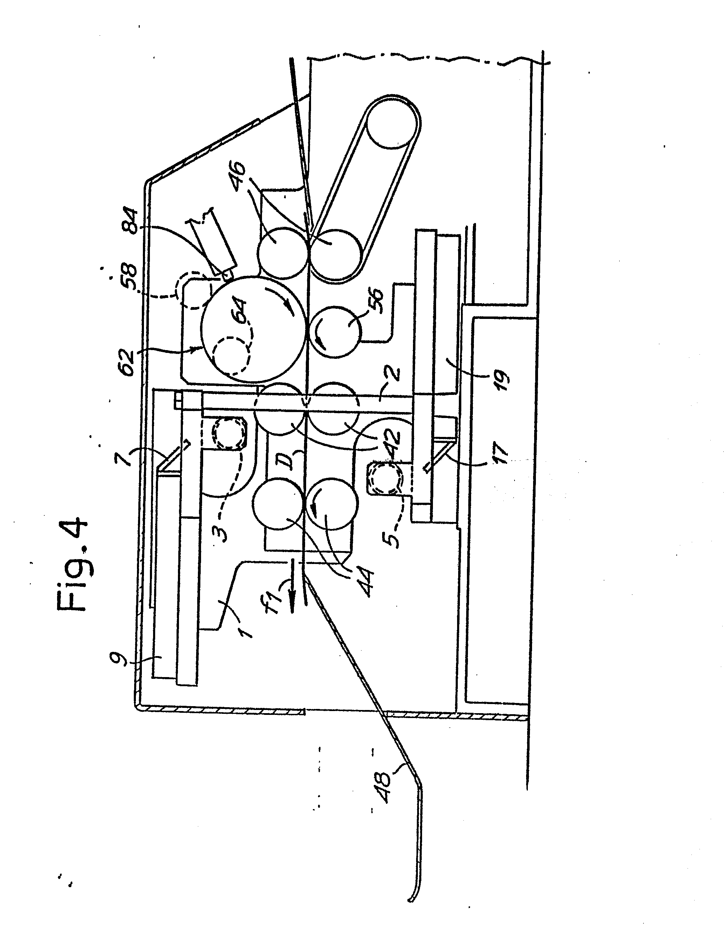

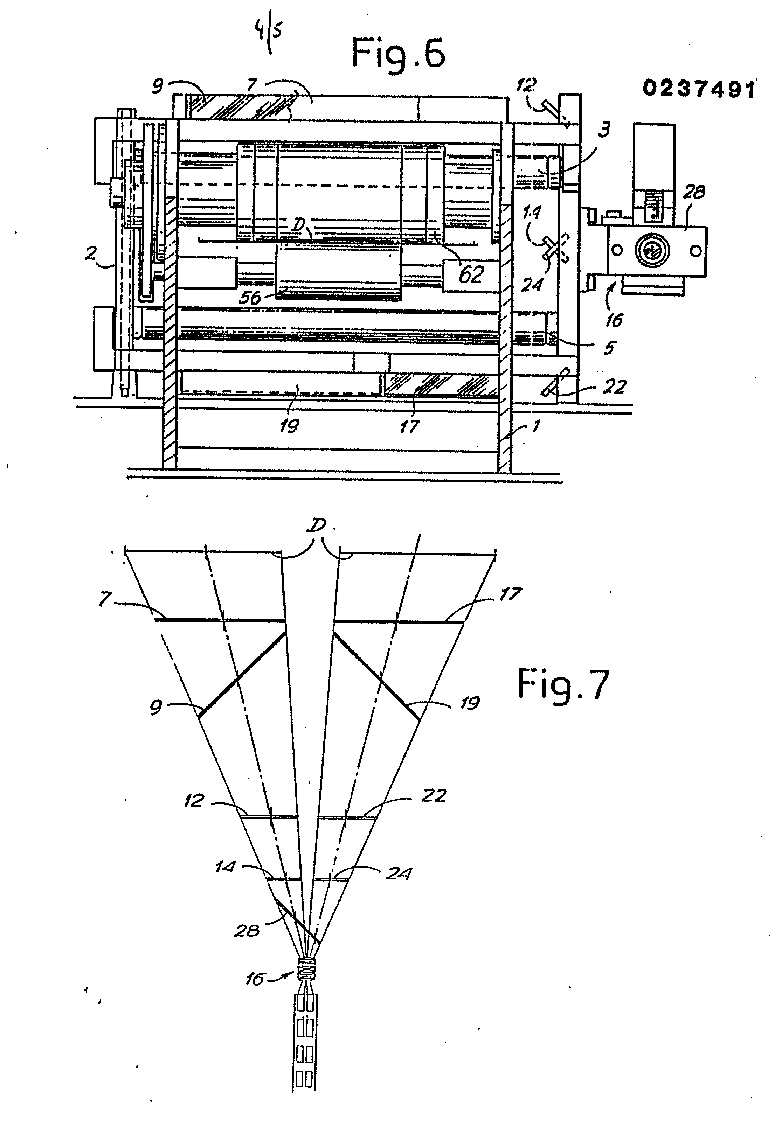

Figs. 4, 5 and 6 show pairs of feeding rollers 42 and 44, for guiding the advancement of the document D into the zones of upper and lower lighting by the transverse tubular lamp 3 and 5. Numeral 46 indicates two rollers forming a mouthpiece for the document insertion. Numeral 48 indicates an outlet chute. Numerals 56, 58, 62 and 64 indicate members of the automatic stamping unit, numeral 58 indicating the inker, 62 the printing roller, 64 the cylinder of wheels with variable data, and 56 a contrast roller.

1. A microcamera for banks, banking-houses and others, comprising a track for guiding the document which is to be microfilmed on the two faces at longitudinally offset positions while simultaneously keeping both the document and the film in motion, two systems for the reflection of the images of the two faces, and an optical system which picks up the two images from a mirror shared by the two systems in order to project them side-by-side onto the film to be exposed, characterized in that each reflection system comprises: a first mirror (7;17) transversally located in respect to the advancement direction and which projects in a direction parallel to the subject plane; a second inclined mirror (9;19) which projects laterally and in a direction parallel to the subject plane; and further side mirrors (12,14,28; 22,24,26) the last of which (28) receives the images of the two reflection systems and is combined with the optical system (16).

2. Camera according to the preceding claim, characterized in that the optical system (16) for the projection on the film has its axis horizontally disposed and parallel to the advancement direction of the document, and the film is made to advance vertically.

Fig.1

1/5

0237491

Fig.2

Fig.3

0237491

Fig.5

0237491

Fig.4

Fig.6

0237491

Fig.7

# Fig.8